# EUROPÄISCHE PATENTSCHRIFT

(11) **EP 0 945 403 B1**
(45) Veröffentlichungstag und Bekanntmachung des Hinweises auf die Patenterteilung: **19.12.2001**
(21) Anmeldenummer: 99103499.2
(22) Anmeldetag: 24.02.1999
(51) Int. Cl.: C02F 1/50, C02F 1/72, A01G 9/00, A01N 37/16, A01N 59/00

(54) **Verfahren zur Bekämpfung pflanzenpathogener Mikroorganismen in Wasserkreisläufen von Gewächshäusern**
Method for controlling plant pathogenic micro-organisms in greenhouse water circuits.
Methode pour lutter contre des micro organismes phytopathogènes dans les circuits d'eau des sèrres

(30) Priorität: 23.03.1998 DE 19812591
(43) Veröffentlichungstag der Anmeldung: 29.09.1999
(73) Patentinhaber: Degussa AG, 40474 Düsseldorf (DE)
(72) Erfinder: Fuchs, Rainer, Dr., 63776 Mömbris (DE); Huss, Michael, 65760 Eschborn (DE); Luy, Thomas, 63579 Freigericht (DE)

(56) Entgegenhaltungen:
- EP-A- 0 361 955
- WO-A-93/18799
- WO-A-94/20424
- WO-A-96/18761
- NL-A- 9 201 631
- DATABASE WPI Section Ch, Week 9218 Derwent Publications Ltd., London, GB; Class C07, AN 92-147255 XP002106165 -& JP 04 088923 A (TOSOH CORP) , 23. März 1992

## Beschreibung

Die Erfindung richtet sich auf ein Verfahren zum Bekämpfen pflanzenpathogener Mikroorganismen, insbesondere Fusarien, in Wasserkreisläufen von Pflanzanlagen, insbesondere solchen in Gewächshäusern, unter Verwendung von Wasserstoffperoxid enthaltenden wäßrigen Peroxycarbonsäurelösungen und einem Deaktivator.

In gewerblich betriebenen Pflanzanlagen, insbesondere in Gewächshäusern, werden Pflanzen auf natürlichen Substraten, wie Böden, zunehmend aber auf synthetischen Substraten, wie beispielsweise Steinwolle, angepflanzt. Die Kulturen werden mit Nährstoffe enthaltendem Wasser bewässert. Von den Pflanzen nicht aufgenommenes, durch das Substrat laufendes Wasser, nachfolgend als Drainagewasser bezeichnet, wird erneut zur Bewässerung benutzt.

In den geschlossenen Wasserkreisläufen reichern sich unterschiedliche Mikroorganismen an, darunter auch phytopathogene Mikroorganismen, wodurch es zum Absterben der Pflanzen oder zur Minderung von deren Qualität kommt. Der Nahrung dienende Kulturen, wie Salate, Gurken und Chicoree, u.a. aber auch Zierpflanzen, werden in besonders starkem Maße von den Pilzen "Fusarium" befallen. In der Praxis ist es bisher nicht gelungen, Fusarien in befriedigender Weise aus dem Gewächshausbereich zurückzudrängen oder ganz zu entfernen, ohne gleichzeitig die Pflanzen durch die verwendeten Mittel zu schädigen und/oder unwirtschaftlich zu sein, wie etwa die bekannte UV-Behandlung oder thermische Prozesse.

Peroxycarbonsäure und/oder Wasserstoffperoxid enthaltende Lösungen wurden in der Landwirtschaft getestet, um pflanzenschädliche Mikroorganismen, wie Pilze, Viren, Bakterien, Hefen und Algen zu bekämpfen oder deren Auftreten zu vermeiden. Gemäß DD-Patent 239 109 wird dem Bewässerungswasser Wasserstoffperoxid zugesetzt. Die Wirkung von Wasserstoffperoxid zum Bekämpfen von pathogenen Organismen, insbesondere Pilzen, ist unbefriedigend. Zudem führt die erforderliche hohe Einsatzmenge zu erheblichen Schädigungen an den Wurzeln der Pflanzen.

Gemäß WO 94/20424 lassen sich bessere Ergebnisse erzielen, wenn zum Drainage- oder Gießwasser eine Perameisensäure enthaltende Lösung zugegeben wird. Bevorzugt wird eine aus Ameisensäure und Wasserstoffperoxid in situ erzeugte Perameisensäure und Wasserstoffperoxid enthaltende Lösung eingesetzt; die Einsatzmenge liegt im Bereich von 1 bis 1000 ppm Perameisensäure und 25 bis 2500 ppm Wasserstoffperoxid. Nachteilig an diesem Verfahren ist, daß die zum Bekämpfen von Fusarien erforderlichen Konzentrationen an Perameisensäure und Wasserstoffperoxid noch so hoch sind, daß es leicht zu Pflanzenschädigungen an den Wurzeln kommen kann. Die Wurzelschädigung durch eine zu hohe Konzentration an Persauerstoffverbindungen kann die Schäden durch eine Fusarium-Infektion übertreffen. Erst eine Konzentration um oder unter 30 ppm Wasserstoffperoxid wird im allgemeinen als unschädlich angesehen.

Aufgabe der Erfindung war, eine verbesserte Methode zur Bekämpfung von pflanzenpathogenen Mikroorganismen, insbesondere Pilze, wie Fusarien, in Pflanzanlagen mit einem Wasserkreislauf aufzuzeigen, womit eine Schädigung der Pflanzen vermieden wird.

Die Aufgabe wird gelöst durch ein Verfahren zum Bekämpfen pflanzenpathogener Mikroorganismen, insbesondere Fusarien, in einem Drainagewasser und Gießwasser umfassenden Wasserkreislauf von Pflanzanlagen, insbesondere von Gewächshäusern, wobei das Drainagewasser mit einer Wasserstoffperoxid enthaltenden wäßrigen Peroxycarbonsäurelösung behandelt wird, das dadurch gekennzeichnet ist, daß man das mit der Peroxycarbonsäurelösung behandelte Wasser vor dessen Verwendung zur Bewässerung zum Zwecke der Reduzierung des Gehalts an Peroxycarbonsäure und Wasserstoffperoxid mit einem festen Zersetzungskatalysator für Aktivsauerstoffverbindungen kontaktiert.

Die Unteransprüche richten sich auf bevorzugte Ausführungsformen des Verfahrens.

Das erfindungsgemäße Verfahren vermeidet einen direkten Kontakt der Pflanzen mit Persauerstoffverbindungen in einer bisher notwendigen hohen Konzentration. Das Verfahren kombiniert eine wirksame Behandlung der mit Mikroorganismen, wie Fusarien, befallenen Drainagewässer mit einer wasserstoffperoxidhaltigen Percarbonsäurelösung und vor der Wiederverwendung der so behandelten Wässer zur Bewässerung der Pflanzen eine Nachbehandlung der an Persauerstoffverbindungen reichen Wässer zwecks Reduzierung des Persauerstoffgehalts auf Werte, die für die Pflanzen unschädlich sind. Die so nachbehandelten Wässer mit reduziertem H₂O₂- und Percarbonsäuregehalt werden nach Verdünnung mittels Brunnen- oder Trinkwasser zum Ersatz der Verdunstungsverluste und Anreicherung mit Nährstoffen wieder zur Bewässerung verwendet.

Aktivsauerstoffverbindungen lassen sich auf katalytischbiologischem Wege unter Verwendung von Peroxidase- oder Katalase-Enzymen oder durch chemische Umsetzung mit einem Reduktionsmittel abbauen. Die Verwendung von Enzymen für den erfindungsgemäßen Zweck ist zwar möglich, der Einsatz von Enzymen im Gewächshausbereich ist aber in der Regel zu teuer, und zudem sind Enzympräparate thermisch empfindlich und nur begrenzt haltbar. Der chemische Abbau, beispielsweise unter Einsatz von Nitrit oder Sulfit, ist wegen der damit verbundenen Aufkonzentrierung von Salzen ungeeignet. Erfindungsgemäß werden die Aktivsauerstoffverbindungen unter Verwendung eines Zersetzungskatalysators abgebaut.

Der Zersetzungskatalysator kann in beliebiger fester Form, wie teilchenförmig, insbesondere in Form von Granulaten, Extrudaten, Schuppen, Prills oder Tabletten, faserförmig oder folienförmig vorliegen. Alternativ hierzu kann der Zersetzungskatalysator auch auf der Oberfläche der Kanäle eines beliebig geformten monolithischen Katalysatormoduls angeordnet sein. Schließlich kann sich der Zersetzungskatalysator auch als Film oder dünne Beschichtung auf Platten befinden, die ihrerseits als vom Wasser durchströmbares Schichtpaket in einem Behälter angeordnet sind.

Zersetzungswirksam sind Schwermetalle und deren in Wasser im wesentlichen unlösliche Verbindungen aus der I., II. und V. bis VIII. Nebengruppe des Periodensystems. Besonders wirksam sind Edelmetalle, insbesondere Pt, Pd und Rh, sowie Oxide, Silikate und Phosphate von Eisen und Mangan, wie Magnetit und Braunstein. Bevorzugt werden solche Schwermetalle oder deren Verbindungen, welche im Milieu des Drainagewassers ausreichend stabil sind. Der pH-Wert des mit der Percarbonsäurelösung behandelten Wassers wirkt sich auf die Zersetzungsgeschwindigkeit der Aktivsauerstoffverbindungen aus - mit zunehmendem pH-Wert nimmt diese zu. Bei Bedarf kann der pH vor der Behandlung auf den gewünschten Wert gebracht werden. Die genannten zersetzungswirksamen Schwermetalle und deren Verbindungen können per se oder trägergebunden vorliegen. Edelmetalle werden vorzugsweise trägergebunden eingesetzt, und zwar an einem teilchenförmigen Träger oder auf der Oberfläche von flächigen Trägern, wie den oben genannten Monolithen oder Plattenstapeln. Geeignete Träger sind der Fachwelt aus dem Katalysatorbereich bekannt. Beispielhaft zu nennen sind Oxide, Mischoxide, Silikate, Phosphate und Nitride, Gläser und keramische Werkstoffe. Eine weitere Klasse von Trägern sind anorganische Polymere, wie Zeolithe und organische Polymere, wie Kationenaustauscher, sowie Aktivkohle, die auch ohne die zusätzlich aufgebrachten Schwermetalle zersetzungswirksam sein kann.

Der Einsatz von Aktivkohle, mit oder ohne zusätzliche Schwermetallbeaufschlagung, gestaltet sich weniger vorteilhaft, weil mit zunehmender Einsatzzeit die Wirksamkeit und Stabilität von Aktivkohle-Granulaten abnimmt.

Gemäß einer bevorzugten Ausführungsform wird ein teilchenförmiger Zersetzungskatalysator in Form eines Festbetts in einem Behälter angeordnet. Das Drainagewasser kann in geflutetem Zustand über das Katalysatorbett geleitet werden. Alternativ kann man das Drainagewasser auch über das Festbett rieseln lassen, so daß das Wasser auf den Katalysatorpartikeln nur einen Film ausbildet und eine hohe Wirksamkeit einschließlich guter Entgasung gewährleistet ist.

Gemäß einer bevorzugten Ausführungsform können aus der Autoabgaskatalysatortechnik bekannte gut verfügbare Katalysator-Monolithe mit edelmetallbeschichteten Kanälen verwendet werden. Durch solche Monolithe, deren Basismaterial üblicherweise ein Keramikmaterial ist, für das vorliegende Verfahren aber auch aus anderen Materialien, wie Kunststoffen, bestehen kann, läßt man das Drainagewasser strömen. Derartige Katalysatoren haben den Vorteil einer großen katalytisch wirksamen Oberfläche bei gleichzeitig hoher chemischer Stabilität gegenüber allen im Drainagewasser enthaltenen Bestandteilen, darunter auch Säuren und Nährstoffen, und verursachen nur einen geringen Druckaufbau.

Zweckmäßigerweise wird das Wasser vor dessen Inkontaktbringung mit dem Zersetzungskatalysator filtriert, um Schwebstoffe abzutrennen und eine Verdichtung eines Katalysatorbetts oder Verstopfung der Kanäle eines Katalysator-Monoliths zu vermeiden. Die Filtration kann unmittelbar vor oder nach der Behandlung des Drainagewassers mit der H₂O₂ enthaltenden Percarbonsäurelösung erfolgen.

Zur Bekämpfung der Fusarien und anderen Mikroorganismen können beliebige Peroxycarbonsäuren mit 1 bis 6 C-Atomen und einer oder zwei Peroxygruppen verwendet werden. Einsetzbar sind auch Mono- und Diperoxycarbonsäuren mit 2 bis 6 C-Atomen und zusätzlich einer oder zwei Hydroxylgruppen. Beispiele sind Perameisensäure, Peressigsäure, Perpropionsäure, Mono- und Diperoxybernsteinsäure, Mono- und Diperoxyglutarsäure, Peroxymilchsäure, Peroxyglykolsäure und Peroxyweinsäure. Bevorzugt werden Peressigsäure und/oder Perameisensäure enthaltende Lösungen. Die zum Einsatz gelangenden Lösungen enthalten aus ihrer Herstellung aus der(den) entsprechenden Carbonsäure(n) mit Wasserstoffperoxid noch Wasserstoffperoxid und gegebenenfalls einen Mineralsäurekatalysator. Bevorzugt eingesetzt werden sogenannte Gleichgewichtslösungen oder Lösungen in der Nähe des Gleichgewichts oder unmittelbar vor Gebrauch verdünnte Lösungen. Eingesetzt werden können zum Beispiel handelsübliche Peressigsäurelösungen mit einem Peressigsäuregehalt im Bereich von 1 bis 40 Gew.-%, insbesondere etwa 5 bis 15 Gew.-%. Vorzugsweise enthalten diese Lösungen herstellungsbedingt anstelle Schwefelsäure die umweltfreundlicheren und pflanzenverträglicheren Orthophosphorsäure, Pyrophosphorsäure oder Polyphosphorsäure der Formel Hₙ₊₂PₙO₃ₙ₊₁, wobei n eine ganze Zahl gleich oder größer 3 ist.

Gemäß einer weiteren bevorzugten Ausführungsform wird zur Behandlung des Drainagewassers eine Kombination aus Peressigsäure und Perameisensäure eingesetzt. Eine solche Lösung läßt sich in einfacher Weise in situ herstellen, indem eine Quelle für Ameisensäure aus der Reihe Ameisensäure und wasserlöslichen Formiaten, insbesondere Natrium- oder Calciumformiat zu einer in bekannter Weise erhältlichen wäßrigen Peressigsäurelösung, insbesondere einer Gleichgewichtsperessigsäurelösung, gibt und die so erhaltene Lösung nach einigen Minuten bis zu weniger. Stunden Standzeit dem Drainagewasser zufügt. Sofern ein Formiat zur Peressigsäurelösung gegeben wird, ist es zweckmäßig, dieses gegenüber anwesendem Mineralsäurekatalysator unterstöchiometrisch zuzugeben. Eine derartig kombinierte Peroxycarbonsäurelösung hat gegenüber der reinen Peroxyameisensäurelösung den Vorteil einer einfachen und sicheren Herstellung und besseren Wirkung aufgrund der längeren Nutzbarkeit und Stabilität - die Handhabung von Ameisensäure ist wegen ihrer hohen Korrosivität dagegen äußerst problematisch - bei im wesentlichen gleicher Wirksamkeit bei der Bekämpfung der Fusarien.

Die Einsatzmenge Percarbonsäurelösung wird so bemessen, daß der Percarbonsäuregehalt im Drainagewasser 1 bis 5000 ppm, insbesondere 10 bis 1000 ppm und besonders bevorzugt 10 bis 50 ppm, Peroxycarbonsäure enthält. Eine Überdosierung ist weniger kritisch, weil sich an die Bekämpfung der phytopathogenen Mikroorganismen, also vor der Benutzung des Wassers zum Bewässern, eine Zersetzung der Aktivsauerstoffverbindungen anschließt.

Das erfindungsgemäße Verfahren erlaubt eine sehr wirksame Bekämpfung phytopathogener Keime, wie insbesondere Fusarien, in Kreislaufwässern von Pflanzanlagen, insbesondere solche in Gewächshäusern. Die bisher oft auftretende Schädigung der Pflanzen durch eine zu hohe Konzentration an Persauerstoffverbindungen wird vermieden. Das Verfahren ist einfach mit geringem technischen Aufwand realisierbar. Durch das Verfahren wird gleichzeitig eine Verstopfung der der Bewässerung dienenden Tropfröhrchen vermieden, da sich in diesen kein Biofilm bildet.

### Beispiel

In einem Gewächshaus mit im wesentlichen Steinwolle als Pflanzsubstrat wurden Tomaten angebaut. Das zur Bewässerung eingesetzte Wasser enthielt die erforderlichen Nährstoffe; das ablaufende Drainagewasser wurde nach Einstellung des Nährstoffgehalts und Ergänzung durch Frischwasser tagsüber kontinuierlich rezykliert.

Durch extern durchgeführte Vorversuche wurde festgestellt, daß Fusarien im ablaufenden Drainagewasser durch Zugabe von 1000 ppm einer Gleichgewichtsperessigsäure mit einem Gehalt von 5 Gew.-% Peressigsäure und 27 Gew.-% Wasserstoffperoxid innerhalb einer Einwirkzeit von 5 Minuten quantitativ abgetötet werden. Während einer solchen Behandlung sank der Gehalt an Peressigsäure und Wasserstoffperoxid nur geringfügig ab.

Das mit 1000 ppm der vorgenannten Peressigsäurelösung versetzte Drainagewasser strömte nach Passage eines Filters zur Abtrennung von Schwebstoffen durch einen Deaktivator. Der Deaktivator bestand aus in einem Behälter hintereinander angeordneten fünf bis acht zylinderförmigen handelsüblichen Keramikträgern (Durchmesser 14,4 cm, Länge 15,2 cm) mit wabenförmigen nebeneinanderliegenden Kanälen (Durchmesser 1,5 mm), deren Wände mit Platin und Rhodium (Gewichtsverhältnis 5:1, Gesamtmenge 13,1 g) beschichtet waren. Das Wasser wurde auf verschiedene pH-Werte eingestellt. Der Wasserdurchsatz betrug 1 m³/h. Das den Deaktivator verlassende Wasser enthielt noch die in der Tabelle angegebenen Gehalte an Peressigsäure und Wasserstoffperoxid.

| | vor Deaktivator | nach Deaktivator | | |
|---|---|---|---|---|
| pH-Wert | 4 | 4 | 7 | 9 |
| Peressigsäure (ppm) | 50 | 25 | 15 | 6 |
| Wasserstoffperoxid (ppm) | 270 | 190 | 130 | 80 |

Die Zersetzungsrate kann außer über den pH-Wert über die Strömungsgeschwindigkeit oder die Größe des Deaktivators oder die Häufigkeit des Kontaktes durch Kreislaufführung gesteuert werden.

Das Wasser des bei pH 7 durchgeführten Versuchs wurde in üblicher Weise mit Brunnenwasser verdünnt (1:2), mit Nährstoffen angereichert und anschließend zur Bewässerung einiger Versuchspflanzen benutzt: Die Wurzeln der Pflanzen blieben frei von Schädigungen durch Aktivsauerstoffverbindungen.

Bei nicht-erfindungsgemäßer alleiniger Behandlung des Drainagewassers mit der genannten Peressigsäurelösung und Wiederverwendung des an Aktivsauerstoffverbindungen reichen Wassers zum Bewässern kam es zu nicht tolerablen erheblichen Wurzelschädigungen, die zwangsweise zu einer Ertragsminderung geführt hätten.

## Patentansprüche

1. Verfahren zum Bekämpfen pflanzenpathogener Mikroorganismen, insbesondere Fusarien, in einem Drainagewasser und Gießwasser umfassenden Wasserkreislauf von Pflanzanlagen, insbesondere von Gewächshäusern, wobei das Drainagewasser mit einer Wasserstoffperoxid enthaltenden wäßrigen Peroxycarbonsäurelösung behandelt wird,
**dadurch gekennzeichnet,**
**daß** man das mit der Peroxycarbonsäurelösung behandelte Wasser vor dessen Verwendung zur Bewässerung zum Zwecke der Reduzierung des Gehalts an Peroxycarbonsäure und Wasserstoffperoxid mit einem festen Zersetzungskatalysator für Aktivsauerstoffverbindungen kontaktiert.

2. Verfahren nach Anspruch 1,
**dadurch gekennzeichnet,**
**daß** man das zu kontaktierende Wasser durch ein Festbett aus einem teilchenförmigen Zersetzungskatalysator strömen oder über das Festbett rieseln läßt.

3. Verfahren nach Anspruch 1,
**dadurch gekennzeichnet,**
**daß** man das zu kontaktierende Wasser durch die Kanäle eines monolithischen Blocks strömen läßt, wobei die Wände der Kanäle einen Zersetzungskätalysator, insbesondere in Form einer ein Edelmetall aus der Reihe Platin, Palladium und Rhodium enthaltenden Beschichtung, enthalten.

4. Verfahren nach Anspruch 1 oder 2,
**dadurch gekennzeichnet,**
**daß** man einen teilchenförmigen, insbesondere granulat-, extrudat- oder tablettenförmigen Zersetzungskatalysator verwendet, ausgewählt aus der Reihe von Aktivkohlen, zersetungswirksamen Schwermetallen und deren wasserlöslichen Verbindungen und trägergebundenen zersetzungswirksamen Schwermetallen und deren Verbindungen, wobei die Träger aus der Reihe inerter Oxide, Silikate, Phosphate, anorganischer und organischer Polymere und Aktivkohlen und die zersetzungswirksamen Schwermetalle aus der Reihe der Elemente der V., VI., VII., VIII., I. und II. Nebengruppe, insbesondere der VII. und VIII. Nebengruppe, des Periodensystems ausgewählt sein können.

5. Verfahren nach einem der Ansprüche 1 bis 4,
**dadurch gekennzeichnet,**
**daß** man das Drainagewasser vor oder nach der Behandlung mit der Peroxycarbonsäurelösung filtriert.

6. Verfahren nach einem der Ansprüche 1 bis 5,
**dadurch gekennzeichnet,**
**daß** die Wasserstoffperoxid enthaltende Peroxycarbonsäurelösung als Peroxycarbonsäure Peressigsäure und/oder Perameisensäure enthält.

7. Verfahren nach einem der Ansprüche 1 bis 6,
**dadurch gekennzeichnet,**
**daß** man zur Behandlung des Drainagewassers diesem 10 bis 1000 ppm Peroxycarbonsäure zusetzt.

## Claims

1. Method for controlling plant pathogenic microorganisms, in particular Fusaria, in a water circuit for plant-cultivation units, in particular greenhouses, containing drainage water and poured water, wherein the drainage water is treated with an aqueous peroxycarboxylic acid solution containing hydrogen peroxide,
**characterised in that**
prior to being used for watering, the water treated with the peroxycarboxylic acid solution is brought into contact with a solid decomposition catalyst for compounds containing active oxygen, for the purpose of decreasing the content of peroxycarboxylic acid and hydrogen peroxide.

2. Method according to claim 1,
**characterised in that**
the water to be contacted is caused to flow through a fixed bed composed of a particulate decomposition catalyst or to trickle over the fixed bed.

3. Method according to claim 1,
**characterised in that**
the water to be contacted is caused to flow through the ducts of a monolithic block, the walls of the ducts containing a decomposition catalyst in the form in particular of a coating containing a precious metal selected from among platinum, palladium and rhodium.

4. Method according to claim 1 or 2,
**characterised in that**
a particulate decomposition catalyst, in the form in particular of granules, extrudate or pellets, is used, selected from among activated carbons, heavy metals which bring about decomposition and their water-soluble compounds, and support-bound heavy metals which bring about decomposition and their compounds, wherein the supports can be selected from among inert oxides, silicates, phosphates, inorganic and organic polymers and activated carbons and the heavy metals which bring about decomposition can be selected from among the elements of the fifth, sixth, seventh, eighth, first and second subgroups, in particular the seventh and eighth subgroups, of the periodic table.

5. Method according to one of claims 1 to 4,
**characterised in that**
before or after the treatment with the peroxycarboxylic acid solution, the drainage water is filtered.

6. Method according to one of claims 1 to 5,
**characterised in that**
the peroxycarboxylic acid solution containing hydrogen peroxide contains peroxyacetic acid and/or peroxyformic acid as the peroxycarboxylic acid.

7. Method according to one of claims 1 to 6,
**characterised in that**
in order to treat the drainage water, 10 to 1000 ppm peroxycarboxylic is added thereto.

## Revendications

1. Procédé pour lutter contre des microorganismes phytopathogènes, en particulier des fusariums, dans un circuit d'eau comprenant de l'eau de drainage et de l'eau d'arrosage d'installations de végétaux, en particulier de serres, l'eau de drainage étant traitée avec une solution d'acide peroxycarboxylique aqueuse contenant du peroxyde d'hydrogène, **caractérisé en ce qu'**on met l'eau traitée avec la solution d'acide peroxycarboxylique, avant son utilisation pour l'irrigation, afin de réduire la teneur en acide peroxycarboxylique et en peroxyde d'hydrogène, en contact avec un catalyseur de décomposition solide pour des composés à oxygène actif.

2. Procédé selon la revendication 1, **caractérisé en ce qu'**on laisse l'eau à mettre en contact s'écouler à travers un lit solide constitué d'un catalyseur de décomposition en forme de particules ou qu'on la laisse ruisseler sur le lit solide.

3. Procédé selon la revendication 1, **caractérisé en ce qu'**on laisse l'eau à mettre en contact s'écouler à travers les canaux d'un bloc monolithique, les parois des canaux contenant un catalyseur de décomposition, en particulier sous forme d'un revêtement contenant un métal précieux parmi la série platine, palladium et rhodium.

4. Procédé selon la revendication 1 ou 2, **caractérisé en ce qu'**on utilise un catalyseur de décomposition sous forme de particules, en particulier sous forme de granules, d'extrudat ou de comprimés, choisi parmi la série des charbons actifs, des métaux lourds actifs pour la décomposition et leurs composés solubles dans l'eau et des métaux lourds actifs en décomposition liés sur des supports et leurs composés, les supports pouvant être choisis parmi la série des oxydes inertes, des silicates inertes, des phosphates inertes, des polymères organiques et inorganiques inertes et des charbons actifs inertes et les métaux lourds actifs en décomposition parmi la série des éléments du Vème, VIème, VIIème, VIIIème, Ier et IIième groupe secondaire, en particulier du VIIème et du VIIIème groupe secondaire du système périodique des éléments.

5. Procédé selon l'une quelconque des revendications 1 à 4, **caractérisé en ce qu'**on filtre l'eau de drainage avant et après le traitement avec la solution d'acide peroxycarboxylique.

6. Procédé selon l'une quelconque des revendications 1 à 5, **caractérisé en ce que** la solution d'acide peroxycarboxylique contenant du peroxyde d'hydrogène contient comme acide peroxycarboxylique de l'acide peracétique et/ou de l'acide performique.

7. Procédé selon l'une quelconque des revendications 1 à 6, **caractérisé en ce qu'**on ajoute pour le traitement de l'eau de draine 10 à 1000 ppm d'acide peroxycarboxylique à ladite eau de drainage.
